# EUROPEAN PATENT APPLICATION

(11) **EP 3 839 477 A1**
(43) Date of publication of application: **23.06.2021**
(21) Application number: 19876877.2
(22) Date of filing: 15.10.2019
(51) Int. Cl.: G01N 15/02, G01N 15/10, G01N 21/05, G01N 35/08

(54) **DUPLEX PARTICLE MEASURING DEVICE**

(30) Priority: 23.10.2018 JP 2018199547
(71) Applicant: HORIBA, Ltd., Minami-ku Kyoto-shi Kyoto 601-8510 (JP)
(72) Inventor: AKIYAMA, Hisashi, Kyoto-shi, Kyoto 601-8510 (JP); TATEWAKI, Yasuhiro, Kyoto-shi, Kyoto 601-8510 (JP); OKA, Yohei, Kyoto-shi, Kyoto 601-8510 (JP); AKAMATSU, Takeshi, Kyoto-shi, Kyoto 601-8510 (JP); NAGURA, Makoto, Kyoto-shi, Kyoto 601-8510 (JP); KIMBA, Takashi, Kyoto-shi, Kyoto 601-8510 (JP)
(74) Representative: Isarpatent
(86) International application number: PCT/JP2019/040519
(87) International publication number: WO 2020/085152

(57) **Abstract**

It is an object to provide a complex particle measurement apparatus capable of preventing a liquid puddle when the image-based method and the laser diffraction/scattering-based method are combined with each other.

A complex particle measurement apparatus (200) comprising a first light source (211) that irradiates a first storage cell (32); a photodetector (22) that detects intensity of light; a second light source (122) that irradiates a second storage cell (33); an imaging unit that images a particle group; an image data output unit that outputs image data; a supporter (3) that supports the first storage cell and the second storage cell; and a communication pipe (35) that connects the first storage cell and the second storage cell to pass a sample solution, wherein the first storage cell and the second storage cell have bottom surfaces located at positions different from each other, and the communication pipe is laid such that a channel from the first storage cell to the second storage cell has an incline of not less than 0 or not more than 0.

## Description

### [Technical Field]

The present invention relates to a complex particle measurement apparatus for measuring particles dispersed in a dispersion medium by multiple methods.

### [Background Art]

There have conventionally been an image analysis type particle size distribution measurement device and a laser diffraction/scattering type particle size distribution measurement device (Patent Document 1). There has also been a complex particle measurement apparatus that is a combination of an image-based method and a laser diffraction/scattering-based method. This corresponds to a laser diffraction/scattering-based particle size distribution measurement device with which an image-based device as an external device is combined.

### [Prior Art Document]

### [Patent Document]

Patent Document 1: Japanese Patent Application Laid-Open No. 2018-4450

### [Summary of the Invention]

### [Problems to be Solved by the Invention]

For such a type of device attached with an external device, a mixed solution containing particles and a dispersion medium (water or the like) circulates between the laser diffraction/scattering-based device and the image-based device, which requires a long channel for circulation, resulting in a puddle of liquid caused by the remaining mixed solution inside the channel.

The present invention is made in view of such circumstances. An object of the present invention is to provide a complex particle measurement apparatus capable of preventing a liquid puddle when the image-based method and the laser diffraction/scattering-based method are combined with each other.

According to the present invention, there is provided a complex particle measurement apparatus comprising: a first light source that irradiates with light a particle group in a first storage cell storing a sample solution containing the particle group dispersed in a dispersion medium; a photodetector that detects intensity of diffracted or scattered light generated by irradiation of the light irradiated; a light intensity signal output unit that outputs a light intensity signal to an arithmetic device for calculating particle size distribution of the particle group based on the intensity of the light output from the photodetector; a second light source that irradiates with light the particle group in a second storage cell storing the sample solution; an imaging unit that images the particle group irradiated with light from the second light source; an image data output unit that outputs image data to the arithmetic device for calculating a physical property of particles of the particle group based on the image data imaged by the imaging unit; a supporter that supports the first storage cell and the second storage cell; and a communication pipe that connects the first storage cell and the second storage cell to pass the sample solution, wherein the first storage cell and the second storage cell have bottom surfaces located at positions different from each other, and the communication pipe is laid such that a channel from the first storage cell to the second storage cell has an incline of not less than 0 or not more than 0.

In the present invention, the first storage cell and the second storage cell are located at different heights in the supporter. The communication pipe connecting the first storage cell and the second storage cell to pass the sample solution is laid such that the channel from the first storage cell to the second storage cell has an incline of not less than 0 or not more than 0. This can prevent a sample solution from staying in the communication pipe.

According to the present invention, there is provided the complex particle measurement apparatus further comprising a circulation mechanism that circulates the sample solution through the first storage cell and the second storage cell, wherein the first storage cell is provided with a first reception port that receives the sample solution from the circulation mechanism and a first delivery port that feeds out the sample solution, and the second storage cell is provided with a second reception port that receives the sample solution fed out from the first storage cell and a second delivery port that feeds out the sample solution to the circulation mechanism, wherein a position in height is increased in order from the first reception port, the first delivery port, the second reception port and the second delivery port.

In the present invention, the positions in height of the first reception port, the first delivery port, the second reception port and the second delivery port are increased in this order. This can prevent the sample solution from staying midway through the channel.

According to the present invention, there is provided the complex particle measurement apparatus, further comprising: a first mirror that changes a light path of light emitted from the second light source to irradiate the second storage cell with the light; and a second mirror that changes an optical axis direction of imaging by the imaging unit and causes the imaging unit to image the particle group irradiated with the light emitted from the second light source.

In the present invention, the light path is sent back by the first mirror and the second mirror to thereby achieve a small footprint of the second light source and the imaging unit while a long light path is ensured. This makes it possible to place various filters midway through the light path, for example. Furthermore, the reduced footprint of the second light source and the imaging unit reduces upsizing of the whole apparatus.

According to the present invention, there is provided the complex particle measurement apparatus, wherein the second light source, the first mirror, the second mirror and the imaging unit are arranged such that a light path of the light from the second light source to the imaging unit draws a U shape.

In the present invention, the second light source, the first mirror, the second mirror and the imaging unit are arranged such that the light path of the light from the second light source to the imaging unit draws a U shape. Thus, the second light source and the imaging unit can be arranged closer to each other, which facilitates wiring from the second light source to the imaging unit.

According to the present invention, there is provided the complex particle measurement apparatus, wherein the second light source, the first mirror, the second mirror and the imaging unit are arranged such that the light path draws a U shape on a plane parallel to a ground plane on which the complex particle measurement apparatus is installed.

In the present invention, the second light source, the first mirror, the second mirror and the imaging unit are arranged such that the light path draws a U shape on a plane parallel to the ground plane, which allows a high magnification camera with such large lenses to be arranged as well.

According to the present invention, there is provided the complex particle measurement apparatus, wherein a light path length of the light from an incident point to an exit point is uneven if light from the second light source is incident to, passes through and exits from an inside of the second storage cell.

In the present invention, the light path length within the second storage cell (from an incident point to an exit point) is selected in correspondence with the magnification and the depth of field of the imaging unit, and the imaging unit is arranged at a position corresponding to the selected light path length and images particles. This makes it possible to reduce the amount of blurred particles imaged in the field of view.

According to the present invention, there is provided the complex particle measurement apparatus, wherein the second storage cell is configured such that an irradiation surface of light from the second light source is not in parallel with an opposing surface to the irradiation surface.

In the present invention, the second storage cell is configured such that an irradiation surface of light from the second light source and an opposing surface to the irradiation surface are not parallel with each other. Thus, change of the imaging position can reduce blur of the image caused by different magnifications.

According to the present invention, there is provided the complex particle measurement apparatus, wherein the second storage cell is configured such that a shape of an irradiation surface of light from the second light source is stepwise in cross section in a direction intersecting with a flowing direction of the sample solution.

In the present invention, the second storage cell is configured such that the shape of an irradiation surface of the light from the second light source is stepwise. Thus, change of the imaging position can reduce blur of the image caused by different magnifications.

According to the present invention, there is provided the complex particle measurement apparatus, wherein the second storage cell is configured such that a distance between a first inner surface irradiated with light from the second light source and a second inner surface parallel to the first inner surface is narrower at a middle portion and wider at both end portions in a direction intersecting with a flowing direction of the sample solution.

In the present invention, the distance between the first inner surface and the second inner surface is narrower at a middle portion and wider at both end portions in a direction intersecting with a flowing direction of the sample solution. This makes it possible to observe only the particles each having the particle size equal to or less than the interval between the first inner surface and the second inner surface. Furthermore, particles of a large size flow through the interval at both end portions without clogging, and thus, even if the image-based method and the scattering-based method are combined, the width of the range for the scattering type particle size distribution measurement can be exploited. In other words, particles of particle sizes falling within the measurement range for the image-based method are imaged. While particles of large particle sizes falling within the measurement range for the scattering-based method but not falling within the measurement range for the image-based method can be passed through the second storage cell without be imaged.

According to the present invention, there is provided the complex particle measurement apparatus, wherein the second light source and the imaging unit are housed in a waterproof casing.

In the present invention, the second light source and the imaging unit are housed in a waterproof casing, even if a liquid such as a sample solution leaks from the second storage cell, it is possible to suppress failures of the second light source and the imaging unit.

### [Effect of the Invention]

According to the present invention, it is possible to measure the particles dispersed in a dispersion medium by multiple methods.

### [Brief Description of Drawings]

FIG. 1 is a block diagram illustrating one example of the configuration of a complex particle measurement apparatus.
FIG. 2 is an explanation diagram illustrating the configuration of a circulation mechanism.
FIG. 3 is a block diagram illustrating one example of the configuration of an image-based particle measurement mechanism.
FIG. 4 is a perspective view illustrating one example of the configuration of the image-based particle measurement mechanism.
FIG. 5 is a perspective view illustrating one example of a changer unit mounted with the first storage cell and the second storage cell.
FIG. 6 is a perspective view of the appearance of the changer unit with which the image-based particle measurement mechanism is mounted.
FIG. 7 is a perspective view illustrating the schematic configuration of the complex particle measurement apparatus.
FIG. 8 is a plan view illustrating another example of the configuration of the second storage cell.
FIG. 9 is a plan view illustrating another example of the configuration of the second storage cell.
FIG. 10 is a perspective view illustrating another example of the configuration of the second storage cell.
FIG. 11 an explanation diagram illustrating another configuration of the complex particle size dispersion measurement apparatus.
FIG. 12 is a perspective view illustrating another mode of the image-based particle measurement mechanism.
FIG. 13 is a perspective view illustrating another mode of the image-based particle measurement mechanism.
FIG. 14 is a perspective view illustrating another example of the configuration of the second storage cell.
FIG. 15A is a cross-sectional view illustrating another example of the configuration of the second storage cell.
FIG. 15B is a cross-sectional view illustrating another example of the configuration of the second storage cell.
FIG. 16 is a perspective view illustrating an image-based particle measurement mechanism housing the second storage cell.
FIG. 17 is a perspective view illustrating a state in which the image-based particle measurement mechanism is loaded into the complex particle measurement apparatus.

### [Modes for Carrying Out the Invention]

### Embodiment 1

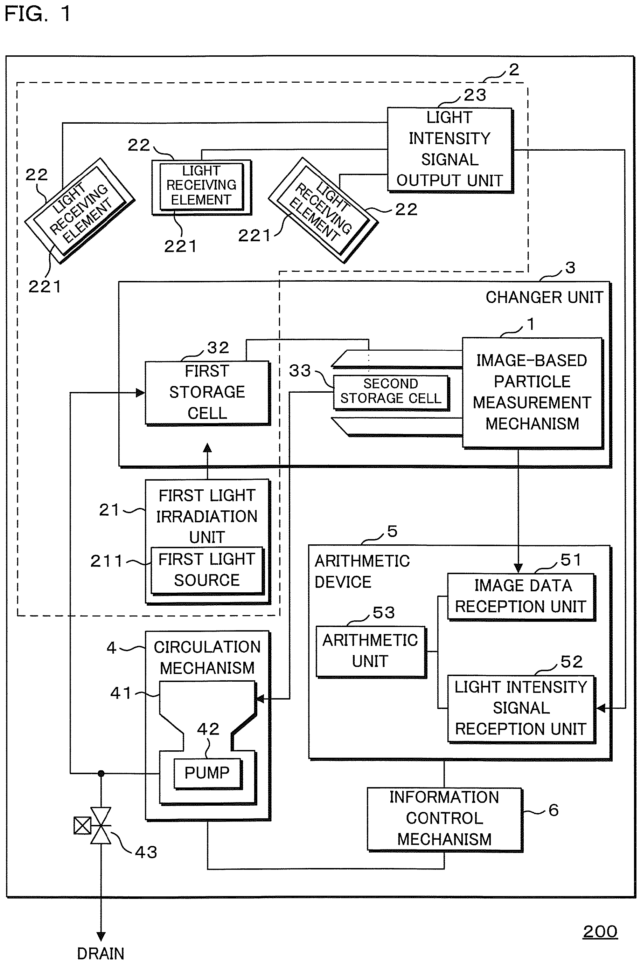

Embodiments are described with reference to the drawings below. FIG. 1 is a block diagram illustrating one example of the configuration of a complex particle measurement apparatus. A complex particle measurement apparatus 200 includes an image-based particle measurement mechanism 1, a scattering-based particle measurement mechanism 2, a changer unit 3, a circulation mechanism 4, an arithmetic device 5 and an information control mechanism 6.

The scattering-based particle measurement mechanism 2 is a laser diffraction/scattering type particle size distribution measurement device. The scattering-based particle measurement mechanism 2 includes a first light irradiation unit 21, a photo detector 22 and a light intensity signal output unit 23. The first light irradiation unit 21 includes a first light source 211. The first light source 211 includes a light emitting element such as a light emitting diode (LED), a laser diode, etc. The first light source 211 emits light of a predetermined wavelength range. The light emitted by the first light source 211 is applied to a first storage cell 32. The photo detector 22 includes a light receiving element 221. The photo detector 22 detects the light diffracted or scattered by the first storage cell 32. The light receiving element 221 is a light detection element such as a photodiode, etc. Though three photodetectors 22 are shown in FIG. 1, the number is not limited thereto. The photodetector 22 may include any other numbers of photodetectors such as one, two or four or more. The light intensity signal output unit 23 outputs a light intensity signal, which is an electrical signal converted from the intensity of the light detected by the photodetector 22.

The changer unit 3 supports the first storage cell 32, a second storage cell 33 and the image-based particle measurement mechanism 1. The first storage cell 32 is a rectangular parallelepiped-shaped container, for example. The side surface of the first storage cell 32 is made of a light-transmittable material such as glass, acryl or the like. The second storage cell 33 is a rectangular parallelepiped-shaped container, for example. The side surface of the second storage cell 33 is made of a light-transmittable material such as glass, acryl or the like. The first storage cell 32 and the second storage cell 33 do not necessarily have a similar configuration. For example, the first storage cell 32 may be different in volume and capacity from the second storage cell 33. The light emitted from the first light source passing through the first storage cell 32 may be different in light path length within the cell from the light from a second light source 122 (to be described later) passing through the second storage cell 33.

The circulation mechanism 4 circulates a sample solution through the complex particle measurement apparatus 200. The sample solution contains a particle group as a target to be measured dispersed in a dispersion medium such as water, alcohol or the like. The particle group includes multiple types of particles different in size, shape, surface status, etc. The multiple types include the same types of particles that are only different in size.

The arithmetic device 5 includes an image data reception unit 51, a light intensity signal reception unit 52 and an arithmetic unit 53. The image data reception unit 51 receives image data acquired through imaging by the image-based particle measurement mechanism 1. The light intensity signal reception unit 52 receives a light intensity signal output by the light intensity signal output unit 23 of the scattering-based particle measurement mechanism 2. The arithmetic unit 53 includes a central processing unit (CPU) and a micro processing unit (MPU). The arithmetic unit 53 may include a digital signal processor (DSP). The arithmetic unit 53 reads in a computer program stored in a storage unit such as a ROM (not illustrated) or the like and causes the complex particle measurement apparatus 200 to perform processing to be described later according to the read computer program. The arithmetic unit 53 performs processing needed for analysis of the particle group such as particle size calculation, particle size distribution calculation, a particle shape analysis, particle number calculation, etc. based on the image data received by the image data reception unit 51 and the light intensity signal received by the light intensity signal reception unit 52.

The information control mechanism 6 displays the results of the particle measurement in various manner, sets arithmetic parameters or controls the respective components via the arithmetic device 5 according to operation by an operator or automatically.

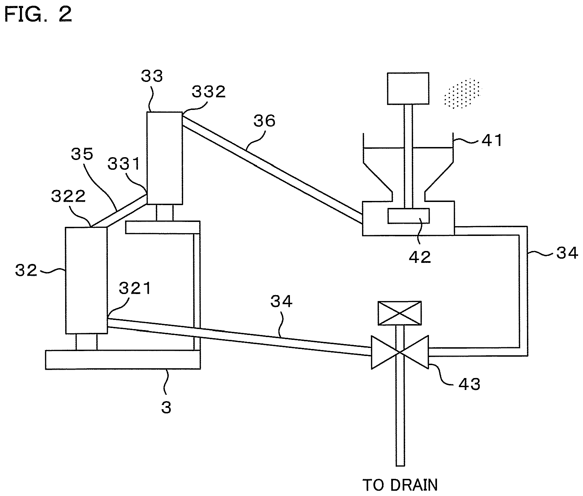

FIG. 2 is an explanation diagram illustrating the configuration of a circulation mechanism. The circulation mechanism 4 includes a dispersion bath 41, a pump 42, a drain valve 43, a supply pipe 34, a communication pipe 35 and a recovery pipe 36. The dispersion bath 41 has a funnel shape with an opening at the upper portion. In the dispersion bath 41, a particle group as a target to be measured is dispersed in a dispersion medium to thereby produce a sample solution. The pump 42 is included at the lower end of the dispersion bath 41. The sample solution is supplied to the first storage cell 32 through the supply pipe 34 by the pump 42. The first storage cell 32 receives the sample solution through a reception port (first reception port) 321 and discharges it from a delivery port (first delivery port) 322. The discharged sample solution is supplied to the second storage cell 33 through the communication pipe 35. The second storage cell 33 receives the sample solution through a reception port (second reception port) 331 and discharges it from a delivery port (second delivery port) 332. The discharged sample solution is recovered through the recovery pipe 36 to the dispersion bath 41. The drain valve 43 is located midway through the supply pipe 34 connecting the dispersion bath 41 and the first storage cell 32. As illustrated in FIG. 2, the positions in height of the drain valve 43, the reception port 321 and the delivery port 322 of the first storage cell 32 and the reception port 331 and the delivery port 332 of the second storage cell 33 are increased in the order of description. This configuration allows a sample solution used for measurement to be discharged from the dispersion bath 41 by gravity with mere switching of the drain valve 43 to an open state. Thus, liquid does not stay somewhere on route, which enables cleaning of the circulation mechanism 4 with a small amount of the dispersion medium.

The measurement operation of the scattering-based particle measurement mechanism 2 is briefly described. In the complex particle measurement apparatus 200, the circulation mechanism 4 circulates a sample solution through the first storage cell 32 and the second storage cell 33. The first light irradiation unit 21 irradiates the first storage cell 32 with light from the first light source. Light diffracted and scattered by the particle group of the sample solution stored in the first storage cell 32 is generated. Only the diffracted light may be generated while only the scattered light may be generated. The generated diffracted light and scattered light enter the light receiving element 221 of the photodetector 22. The light intensity signal output unit 23 outputs a light intensity signal, which is an electric signal converted from the light detected by the photodetector 22, to the arithmetic device 5. The arithmetic device 5 receives the light intensity signal by the light intensity signal reception unit 52. The arithmetic unit 53 of the arithmetic device 5 calculates the particle size and computes the distribution of the particle size based on the received light intensity signal. According to the above-described operation, the distribution of the particle size is measured by the scattering-based method.

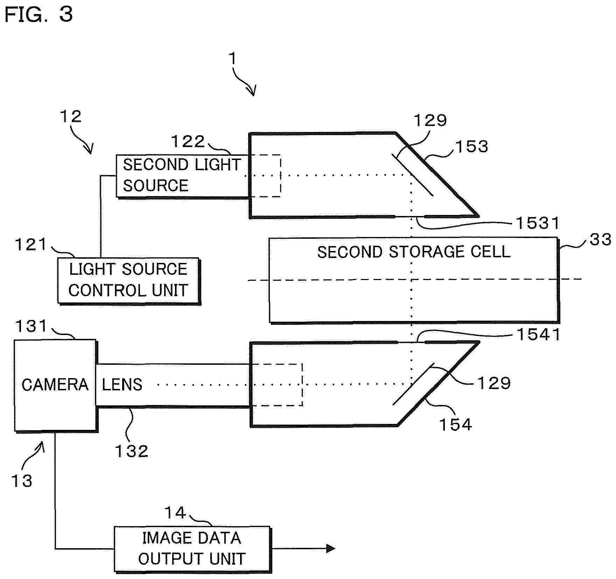

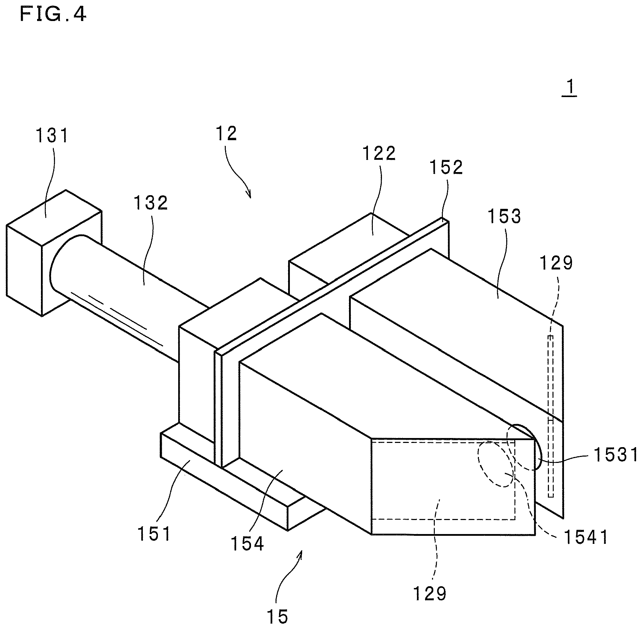

FIG. 3 is a block diagram illustrating one example of the configuration of an image-based particle measurement mechanism. FIG. 4 is a perspective view illustrating one example of the configuration of the image-based particle measurement mechanism. The image-based particle measurement mechanism 1 includes a second light irradiation unit 12, an imaging unit 13, an image data output unit 14 and a housing unit 15. The second light irradiation unit 12 includes a light source control unit 121, the second light source 122 and two reflecting mirrors 129. The light source control unit 121 controls emission of the light from the second light source 122. The light source control unit 121 flashes the second light source 122 at a predetermined frequency. One of the reflecting mirrors 129 changes the light path of the light emitted from the second light source 122. The imaging unit 13 includes a camera 131 and a lens 132. The camera 131 can obtain a monochrome image. The camera 131 outputs a monochrome image to the image data output unit 14. The camera 131 may be able to output a color image or a raw image. The lens 132 is configured to locate an optical lens in a cylindrical casing. The image data output unit 14 outputs image data to the image data reception unit of the arithmetic device 5. Though the second light source 122 flashes in the description above, it may constantly be lit.

The housing unit 15 includes a base part 151, a partition plate 152, a first waterproof unit 153 and a second waterproof unit 154. The base part 151 is tabular. The base part 151 is securely mounted with the second light source 122 and the lens 132. The partition plate 152 is tabular. The partition plate 152 is secured so as to upstand vertically from the top surface of the base part 151. The partition plate 152 is provided with two through holes (not illustrated) through which the second light source 122 and the lens 132 penetrate, respectively. The provision of the partition plate 152 between the first waterproof unit 153 as well as the second waterproof unit 154 and the camera 131 as well as the second light source 122 prevents a sample solution from flowing into the camera 131 and the second light source 122 if the sample solution is leaking.

The first waterproof unit 153 has a square pole shape. One end in the longitudinal direction of the first waterproof unit 153 is opened while the other end thereof is formed of an inclined plane of 45 degrees. A part of the second light source 122 is inserted from the one end of the first waterproof unit 153. One of the reflecting mirrors 129 is disposed near the other end of the first waterproof unit 153. A window part 1531 is formed on the side surface near the other end of the first waterproof unit 153. The first waterproof unit 153 seals the part of the second light source 122 together with the partition plate 152.

The second waterproof unit 154 has a square pole shape similarly to the first waterproof unit 153. One end in the longitudinal direction of the second waterproof unit 154 is opened while the other end is formed of an inclined plane of 45 degrees. The lens 132 is inserted from the one end of the second waterproof unit 154. The other of the reflecting mirrors 129 is disposed near the other end of the second waterproof unit 154. A window part 1541 is formed on the side surface near the other end of the second waterproof unit 154. The second waterproof unit 154 seals the part including the tip of the lens 132 together with the partition plate 152.

The first waterproof unit 153 and the second waterproof unit 154 are secured to the base part 151 to have a gap. The second storage cell 33 is located at the gap. The window part 1531 of the first waterproof unit 153 and the window part 1541 of the second waterproof unit 154 are opposed to each other across the gap.

In the image-based particle measurement mechanism 1, the light emitted from the second light source 122 goes through the inside of the first waterproof unit 153 in the longitudinal direction. The light changes its path by the reflecting mirror 129 (first mirror) and exits outside the first waterproof unit 153 through the window part 1531. The exiting light irradiates the second storage cell 33. Some of the light that passes through the second storage cell 33 enters the second waterproof unit 154 through the window part 1541. The incident light changes its path by the reflecting mirror 129 (second mirror) and goes through the inside of the second waterproof unit 154 in the longitudinal direction. The light impinges on the lens 132 to form an image by the camera 131. The formed image is an shaded image of the particle group. The light path of the light from the second light source 122 to the camera 131 is U-shaped.

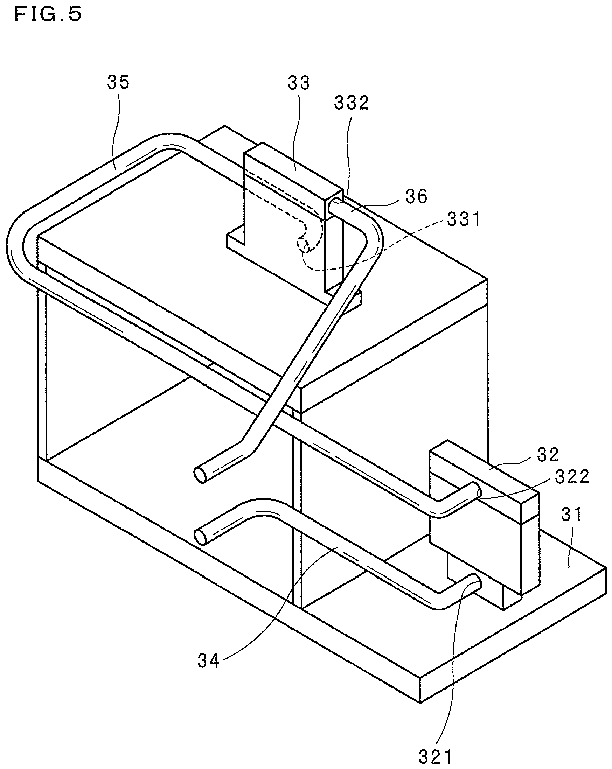

Next, a changer unit (supporter) to be used together with the image-based particle measurement mechanism 1 in the present embodiment is described. FIG. 5 is a perspective view illustrating one example of a changer unit mounted with the first storage cell and the second storage cell. The changer unit 3 has a tabular base 31. The first storage cell 32 and the second storage cell 33 are attachable to and detachable from the base 31 sheet. As illustrated in FIG. 5, the first storage cell 32 and the second storage cell 33 are installed so as to be different in positions in height. The first storage cell 32 and the second storage cell 33 are installed so as to have the bottom surfaces located at positions different from each other. The second storage cell 33 is located higher than the first storage cell 32. As described above, the first storage cell 32 is a cell for storing a sample solution to perform a laser diffraction/scattering-based particle size distribution measurement. As described with reference to FIG. 2, a sample solution is supplied from the reception port 321 (first reception port) of the first storage cell 32 through the supply pipe 34. The sample solution is discharged from the delivery port (first delivery port) 322 of the first storage cell 32 and supplied through the communication pipe 35 to the second storage cell 33 from the reception port (second reception port) 331. The sample solution discharged from the delivery port (second delivery port) 332 of the second storage cell 33 is recovered in the dispersion bath 41 through the recovery pipe 36. The positions in height of the reception port 321 and the delivery port 322 of the first storage cell 32 and the reception port 331 and the delivery port 332 of the second storage cell 33 are increased in the order of description. The communication pipe 35 connecting the delivery port 322 of the first storage cell 32 and the reception port 331 of the second storage cell 33 is laid in a spiral. The channel from the delivery port 322 of the first storage cell 32 to the reception port 331 of the second storage cell 33 has an incline of not less than 0. Though the channel may have a section of the channel with an incline of 0, this section is desirably short. If the section of the channel with an incline of 0 is long, a sample solution may stay there.

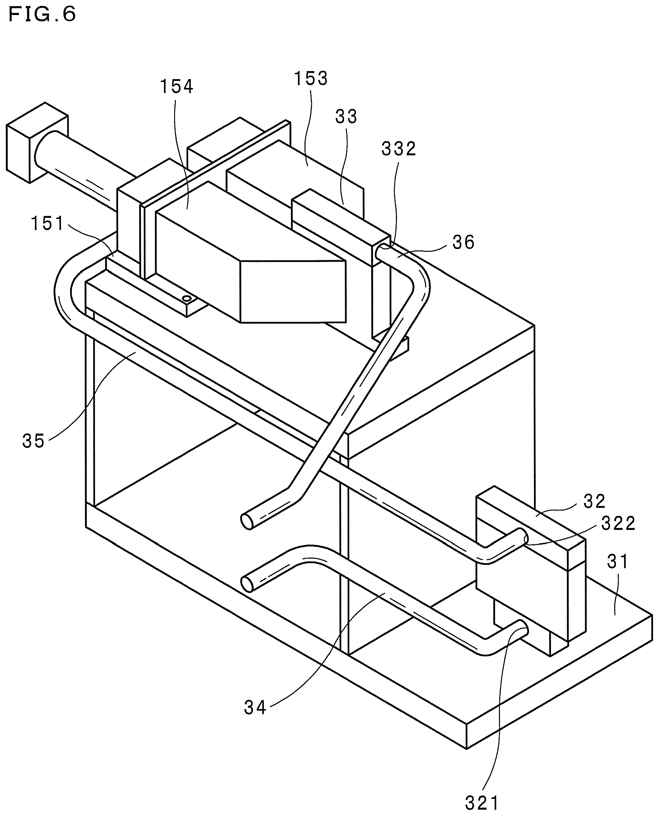

FIG. 6 is a perspective view of the appearance of the changer unit with which the image-based particle measurement mechanism is mounted. The image-based particle measurement mechanism 1 is secured to the changer unit 3 such that the second storage cell 33 is located in a gap between the first waterproof unit 153 and the second waterproof unit 154.

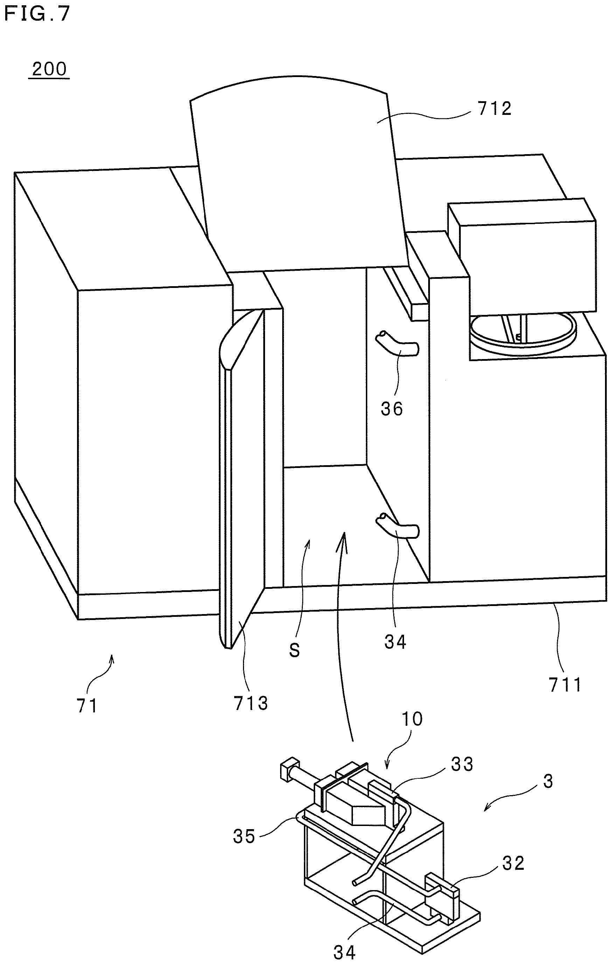

FIG. 7 is a perspective view illustrating the schematic configuration of the complex particle measurement apparatus. A main body housing 71 of the complex particle measurement apparatus 200 includes an apparatus body base 711 and openable lids 712 and 713. The main body housing 71 houses the scattering-based particle measurement mechanism 2, the circulation mechanism 4, the arithmetic device 5, the information control mechanism 6, a power source, etc. The changer unit 3 mounted with the image-based particle measurement mechanism 1, the first storage cell 32, the second storage cell 33, etc. is detachably loaded into the space S inside the main body housing 71. The openable lids 712 and 713 are provided for easily taking the changer unit 3 in or taking it out. It is noted that the arithmetic device 5 and the information control mechanism 6 do not need to be built into the complex particle measurement apparatus 200. They may be configured as separate devices from the complex particle measurement apparatus 200. The separate device may be a personal computer (PC) or the like.

In the present embodiment, the part of the second light source 122 near the second storage cell 33 is sealed by the first waterproof unit 153 and the partition plate 152. Furthermore, the tip of the lens 132 near the second storage cell 33 is sealed by the second waterproof unit 154 and the partition plate 152. Thus, it is possible to prevent the second light source 122, the lens 132 and the reflecting mirror 129 or the like from getting wet even if a sample solution leaks outside the second storage cell 33 for any reason. Moreover, the image-based particle measurement mechanism 1 is provided higher than the first storage cell 32 and thus, it is possible to prevent the second light source 122, the lens 132 and the reflecting mirror 129 or the like from getting wet even if a sample solution leaks outside the first storage cell 32 for any reason.

In the present embodiment, the communication pipe 35 is laid in a spiral, which can prevent a part of the sample solution from staying midway through the communication pipe. If cleaning is performed while a sample solution containing a particle group stays somewhere in the pipe, the dispersion medium (water) needs to be repeatedly fed and drained in order to completely discharge the particle group. In the present embodiment, however, a sample solution can substantially completely be discharge without staying when cleaning is performed. Thus, a very small quantity of the sample solution remaining in the supply pipe 34, the communication pipe 35, the recovery pipe 36, etc. allows less amount of the dispersion medium used for cleaning. In addition, piping in a spiral enhances ease of maintenance when a cell is replaced.

In the present embodiment, since the longitudinal direction of the lens 132 is assumed as a horizontal direction, the lens 132 having a long lens barrel can be employed even if the image-based particle measurement mechanism 1 is used so as to be secured to the changer unit 3.

### (Another Configuration of Second Storage Cell)

In the complex particle measurement apparatus 200 described above, particle size dispersion is measured by the scattering-based method using the first storage cell 32. The measurement in the scattering-based method is performed as described below. A sample solution in which particles to be measured is dispersed is stored in the cell, and the cell is irradiated with light. The irradiated light is diffracted or scattered by the particles within the cell. The light intensity of the diffracted or scattered light is detected by multiple photodetectors 22, and particle size distribution is evaluated from the light intensity distribution extracted from the intensity detected by the photodetectors 22. Meanwhile, a particle size is measured by the image-based method using the second storage cell 33. The measurement in the image-based method is performed by the image-based particle measurement mechanism 1 as described above. In the image-based method, the shape, the aspect ratio, the perimeter, the area, the Feret diameter, etc. other than the particle size can be measured. The measurement result and the analysis result based on the measurement result are displayed on a display unit such as a liquid crystal display apparatus, etc. by the information control mechanism 6. Upon displaying, the result of the image-based particle measurement mechanism 1 (particle shape, for example) and the result of the scattering-based particle measurement mechanism 2 (particle size distribution, for example) may simultaneously be displayed on the display unit.

The complex particle measurement apparatus 200 performs measurements in the two methods by using one circulation mechanism. However, the optimum value of the concentration of the particles dispersed in a sample solution is different between the scattering-based method and the image-based method. The optimum concentration is considered to be higher in the scattering-based method than in the image-based method. Furthermore, in the image-based method, imaging using a lens with a high magnification is required in order to measure particles with smaller diameters. However, if the lens with a high magnification is used, the focal depth becomes shallow. Regardless of a shallow focal depth, the use of a cell (the light path length and the dimensions) the same as that used in the scattering-based method produces multiple blurred unfocused images of particles. This affects obtainment of the edge upon measurement of the image-based method, which reduces the accuracy of measurement of the particles. The following describes the configuration of the second storage cell 33 in order to solve such a problem.

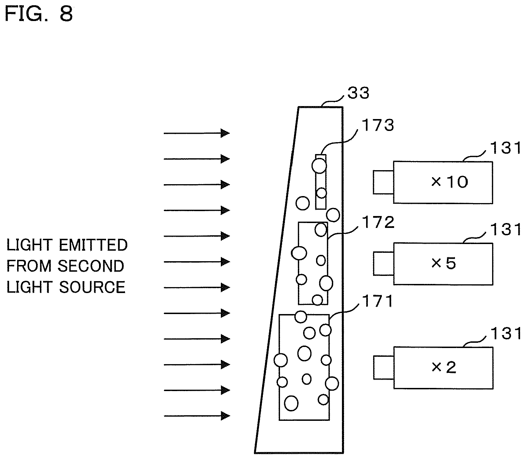

FIG. 8 is a plan view illustrating another example of the configuration of the second storage cell. FIG. 8 is a plan view when the second storage cell 33 is viewed from above. The sample solution flows from the depth to the front of the sheet of the drawing. The camera 131 illustrated in FIG. 8 shows an example of an imaging position. The second storage cell 33 or the camera 131 is moved in the up-down direction of the sheet of the drawing to thereby allow imaging at three different positions. In FIG. 8, light is emitted from the left side of the second storage cell 33. As illustrated in FIG. 8, one broad surface (left surface and irradiated surface) of the opposing surfaces is assumed as a tapered surface for the second storage cell 33. That is, the width (the width of the cell) narrows from bottom to top. At the upper part of the sheet of the drawing, imaging is performed at a high magnification. At the lower part of the sheet of the drawing, imaging is performed at a low magnification. At the middle of the sheet of the drawing, imaging is performed at a medium magnification. As illustrated in FIG. 8, at the lower part of the sheet of the drawing, imaging is performed at the magnification of a depth of field 171 (two times, for example). At the middle of the sheet of the drawing, imaging is performed at the magnification of a depth of field 172 (five times, for example). At the upper part of the sheet of the drawing, imaging is performed at the magnification of a depth of field 173 (ten times, for example). Thus, substantially the entire area of the imaging positions fall within the depth of field, which prevents blurred unfocused images of particles from being imaged. Additionally, owing to the tapered surface configuration, even a sample solution containing particles with relatively large diameters that cannot pass through the position where the width of the cell is small can pass through the position of the lower part of the sheet of the drawing where the width of the cell is great, which can prevent particles from staying in the cell.

It is noted that the sample solution desirably flows in the direction normal to the sheet of the drawing rather than the up-down direction of the sheet of the drawing, in order to avoid clogging with particles. Furthermore, as illustrated in FIG. 8, the tapered surface is desirably formed on the surface on the left side of the sheet of the drawing rather than on the right side of the sheet of the drawing. When the right side surface is tapered, light is reflected or diffracted by the tapered surface, resulting in interference with imaging. Meanwhile, change of the imaging position is performed by moving the second storage cell 33 or the camera 131 using a linear stage, for example.

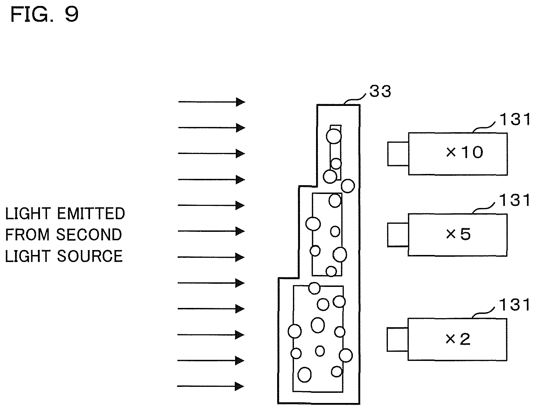

FIG. 9 is a plan view illustrating another example of the configuration of the second storage cell. The second storage cell 33 illustrated in FIG. 9 has a left side surface formed stepwise so as to narrow its width from bottom to top. As illustrated in FIG. 9, the width of the cell is formed stepwise according to the depth of field in correspondence with the magnification for each imaging position. Thus, substantially the entire area of the imaging positions falls within the depth of field, which can prevent a blurred unfocused image of the particles from being imaged.

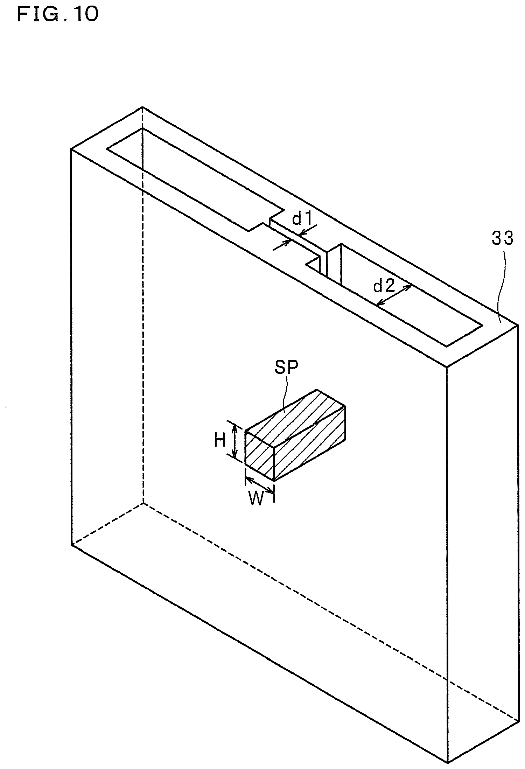

FIG. 10 is a perspective view illustrating another example of the configuration of the second storage cell. In the second storage cell 33 illustrated in FIG. 10, the width of the cell d1 at the middle portion in the longitudinal direction is narrowed while the width of the cell d2 (the interval between the first inner surface and the second inner surface) at the rest of the portion (both end portions other than the middle portion) is expanded. It is assumed that d1 is =500 µm and d2= 4 mm, for example. Imaging is performed only at a region SP. For example, the height H and the width W of the region SP are assumed to be 800 µm. For the second storage cell 33 illustrated in FIG. 10, particles having particle sizes above d1 do not pass through the middle portion in the longitudinal direction, which enables accurate measurement of the particle size distribution of the particles having particle sizes below d1.

As described above, while circulating a common sample solution between the image-based particle measurement mechanism 1 and the scattering-based particle measurement mechanism 2, the complex particle measurement apparatus 200 can measure the sample solution. The apparatus 200 can measure the particle size distribution of the entire particles by the scattering-based method while specifically measuring the smaller particles such as a shape by the image-based method.

Though the storage cell described above is a flow cell, the storage cell is not limited thereto. As a storage cell, a batch cell, a cell for a high-concentration sample with a shorter cell width, etc. may be used. In addition, these cells are adequately exchangeable.

In the image-based particle measurement mechanism 1, the accuracy of the lens, etc. forming of an optical system and the accuracy of assembly are larger than the particle sizes to be measured. This requires calibration after assembly. This is because an individual difference may occur in a distance corresponding to one pixel. Hence, after the image-based particle measurement mechanism 1 has been assembled, a reticle formed with a dot pattern is installed instead of the second storage cell 33 to perform calibration.

In addition, the image-based particle measurement mechanism 1 can determine whether or not the entire circulation system has been cleaned based on the imaged image before circulating a sample solution. It can instruct the circulation mechanism about a necessary cleaning time and instruct the circulation mechanism about the end of the cleaning by determining the status of cleaning.

### (Another Mode of Complex Particle Measurement Apparatus)

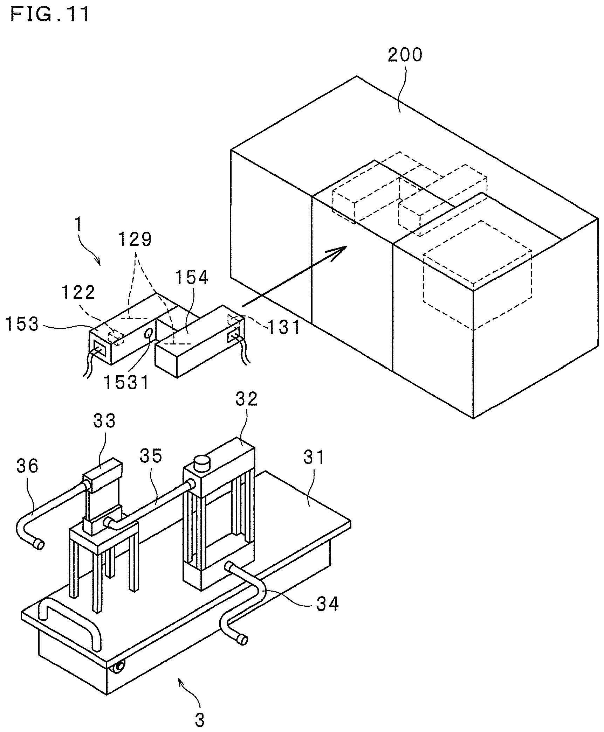

In the above description, the image-based particle measurement mechanism 1 to be used in the complex particle measurement apparatus 200 is assumed to be secured to the changer unit 3 as illustrated in FIG. 7. The secured position is not limited to the changer unit 3. The image-based particle measurement mechanism 1 may be secured to the inside of the complex particle measurement apparatus 200. FIG. 11 an explanation diagram illustrating another configuration of the complex particle size dispersion measurement apparatus. In the image-based particle measurement mechanism 1 illustrated in FIG. 11, the first waterproof unit 153 including the second light source 122 and the second waterproof unit 154 including the camera 131 are secured such that the ends of the first waterproof unit 153 and the second waterproof unit 154 in the longitudinal direction are slid from each other to form an S shape. Then, the image-based particle measurement mechanism 1 is secured to the complex particle measurement apparatus 200. Thus, main components to be mounted on the changer unit 3 include the first storage cell 32, the second storage cell 33, the supply pipe 34, the recovery pipe 36 and the communication pipe 35, which can achieve weight reduction of the changer unit 3. Moreover, the second light irradiation unit 12 and the imaging unit 13 that are main components of the image-based particle measurement mechanism 1 are not taken in and out. This makes it possible to prevent a failure of the second light irradiation unit 12 and the imaging unit 13 caused by vibration and shock occurring when the changer unit 3 is taken in and out.

### (Another Mode of Image-Based Particle Measurement Mechanism)

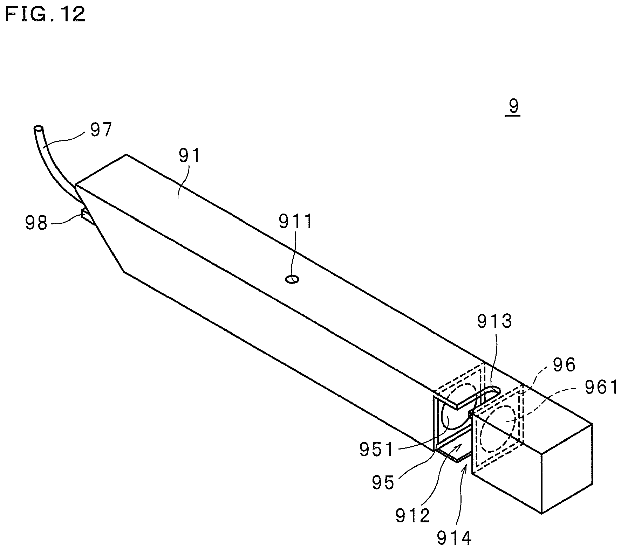

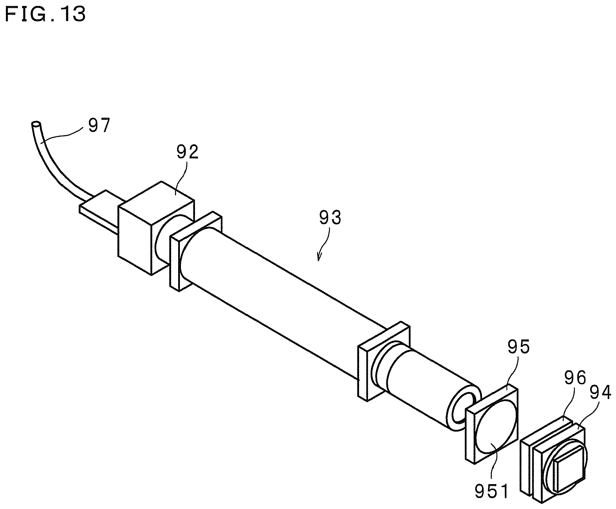

Another mode of the image-based particle measurement mechanism is described below. FIGs. 12 and 13 are each a perspective view illustrating another mode of the image-based particle measurement mechanism. FIG. 13 illustrates the image-based particle measurement mechanism from which a casing is removed. The image-based particle measurement mechanism 9 includes a casing 91, a camera 92, a lens 93, a light source unit 94, window frames 95 and 96, an output cable 97 and a power cable 98.

The casing 91 has a hollow rectangular parallelpiped shape. The casing 91 is provided with a threaded hole 911 on the top surface in the longitudinal direction. On one side surface near one end of the casing 91 in the longitudinal direction, a rectangular opening 912 is provided. An upper plate portion and a lower plate portion of the part where the opening 912 is located are formed with U-shaped cutouts 913 and 914, respectively, extending in the direction opposite to the opening 912. The window frames 95 and 96 are rectangular. The window frame 95 is provided with a circular window 951 while the window frame 96 is provided with a circular window 961. The window frames 95 and 96 have contours substantially the same as a cross-section normal to the longitudinal direction of the casing 91. The window frames 95 and 96 are arranged on both sides of the opening 912 so as to be opposed to each other in the longitudinal direction of the casing 91.

The camera 92 and the lens 93 are similar to those described in the above described embodiment, and thus the detailed description is not repeated here. Furthermore, the light source unit 94 is similar to the second light source 122 described above, and thus the detailed description is not repeated here. The output cable 97 transmits a video signal from the camera 92. The power cable 98 supplies power to the camera 92 and the light source unit 94.

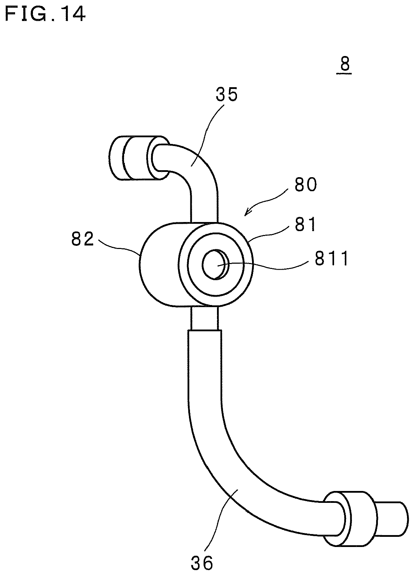

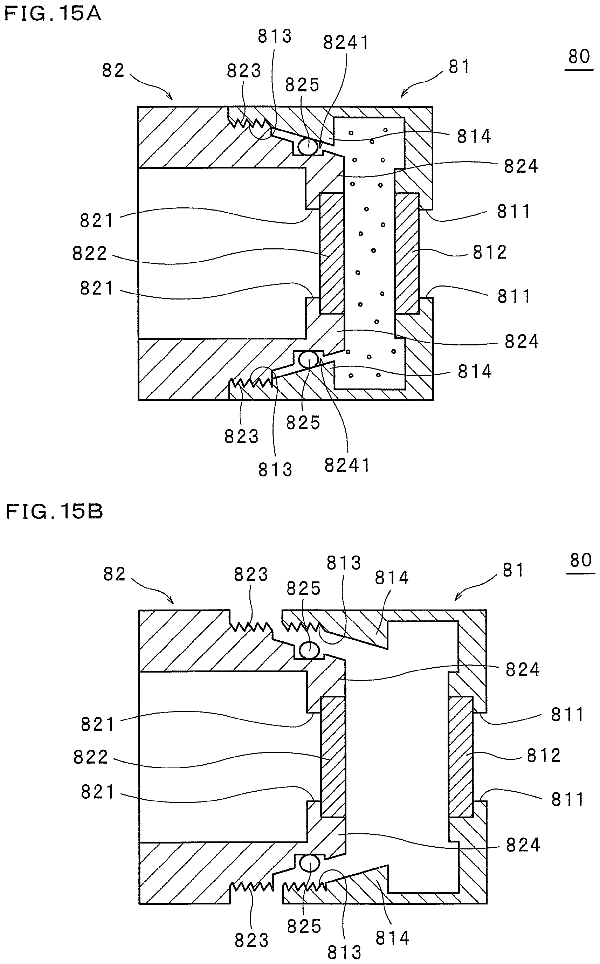

FIG. 14 is a perspective view illustrating another example of the configuration of the second storage cell. FIG. 15A and FIG. 15B are each a cross-sectional view illustrating another example of the configuration of the second storage cell. The second storage cell 8 includes a cylindrical main body 80, a communication pipe 35 and a recovery pipe 36. The main body 80 has a hollow cylindrical shape. The main body 80 includes a first cylinder 81 and a second cylinder 82 each having a bottomed cylindrical shape.

The first cylinder 81 includes a circular aperture 811 on a part of the bottom portion. A light-transmittable member 812 is in the form of a circular plate having a diameter greater than the opening 811. The light-transmittable member 812 is made of a light-transmittable material that transmits light. The light-transmittable member 812 fills the opening 811. The surface opposed to the bottom portion of the first cylinder 81 is an open portion. An internal thread 813 is formed on the internal circumferential surface of the tip (open end) of the open portion. At the cylindrical portion of the first cylinder, a thick plate part 814 where the thickness of the plate increases is formed from the portion of the internal thread 813 (internal thread portion) toward the bottom portion.

The second cylinder 82 includes a circular aperture 821 on a part of the bottom portion. A light-transmittable member 822 is cylindrical having a diameter greater than the opening 821. The light-transmittable member 822 is made of a light-transmittable material that transmits light. The light-transmittable member 822 fills the opening 821. The surface opposed to the bottom portion of the second cylinder 82 is an open portion. An external thread 823 is formed on the external circumferential surface at the intermediate portion (closer to the bottom portion) between the open portion and the bottom portion. The second cylinder 82 has a reduced diameter part 824 where the external diameter is reduced in a tapered manner from the portion formed with the external thread 823 (external thread portion) toward the bottom portion. A groove part 8241 is formed on the external circumferential surface at the intermediate portion between the external thread 823 of the reduced diameter part 824 and the bottom portion. An O-ring is fit into the groove part 8241. The O-ring is made of an elastic material.

The bottom portion of the second cylinder 82 is inserted into the inside of the first cylinder 81 such that the internal surface of the bottom portion of the first cylinder 81 is opposed to the external surface of the bottom portion of the second cylinder 82. The main body 80 is assembled such that the first cylinder 81 is externally fit onto the second cylinder 82 while the internal thread 813 is threadedly engaged with the external thread 823. As the thickness of the thick plate part 814 of the first cylinder 81 increases, the external diameter of the reduced diameter part 824 of the second cylinder 82 decreases. This minimizes the clearance where the first cylinder 81 and the second cylinder 82 are threadedly engaged when the first cylinder 81 is externally fit onto the second cylinder 82. Furthermore, the clearance is partly filled by the O-ring 825, which can prevent a sample solution flowing in the inside of the main body 80 from leaking through the clearance.

For the second storage cell 8, the second cylinder 82 has a reduced diameter part 824 where the external diameter is reduced in a tapered manner from the portion formed with the external thread 823 toward the bottom portion. Thus, the internal thread 813 formed on the internal circumferential surface of the first cylinder 81 is not in contact with the O-ring 825 attached to the second cylinder 82 when the first cylinder 81 is removed from the second cylinder 82 in order to clean the inside of the second storage cell 8. This makes it possible to prevent a sample solution adhering to the O-ring 825 from entering the internal thread 813, which ensures easy cleaning of the second storage cell 8.

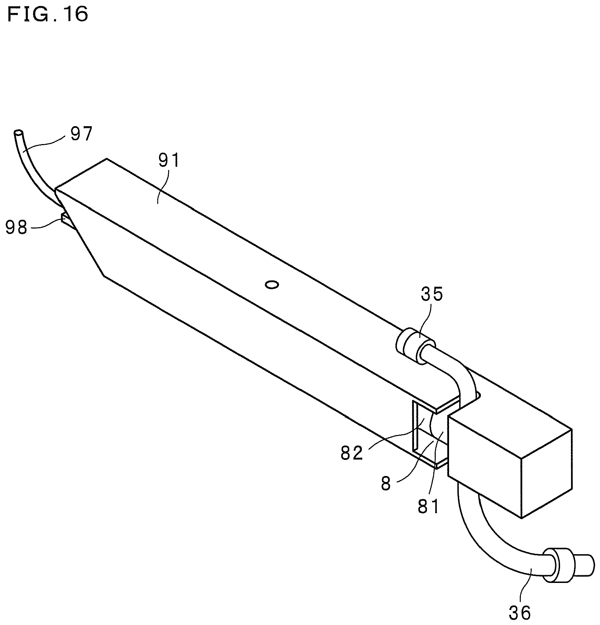

FIG. 16 is a perspective view illustrating an image-based particle measurement mechanism housing the second storage cell. The second storage cell 8 is inserted through the opening 912 provided on the image-based particle measurement mechanism 9. The first cylinder 81 of the second storage cell 8 is closer to the tip portion side (light source unit 94 side) in the longitudinal direction while the second cylinder 82 is closer to the middle portion side (camera 92 side) in the longitudinal direction. In addition, the communication pipe is inserted into the upper cutout 913 formed at the upper surface of the casing 91 while the recovery pipe 36 is inserted into the lower cutout 914 formed at the lower surface of the casing 91. The first cylinder 81 and the second cylinder 82 are fit into the window frame 96 and the window frame 95, respectively, to thereby fasten the second storage cell 8.

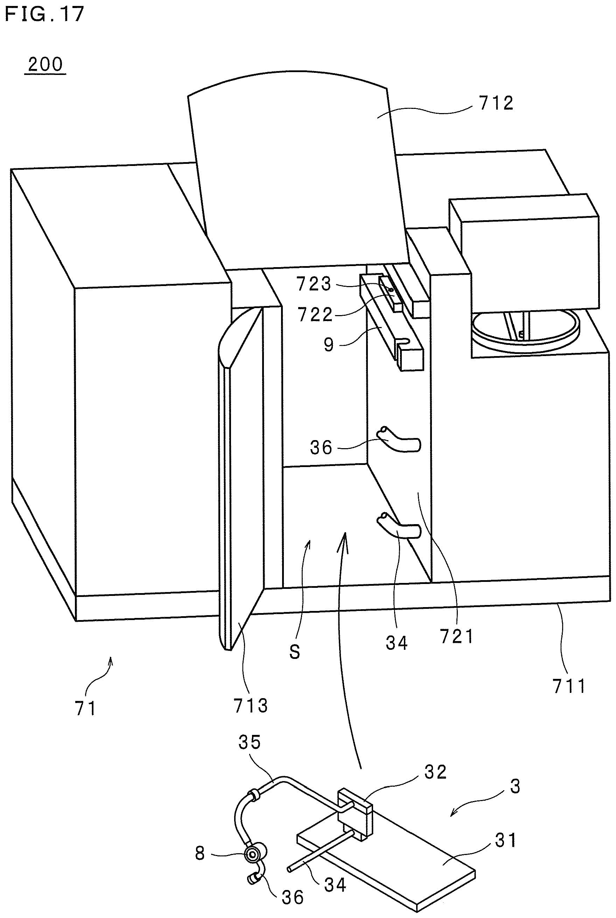

FIG. 17 is a perspective view illustrating a state in which the image-based particle measurement mechanism is loaded into the complex particle measurement apparatus. A plate-like fixation member 722 that horizontally protrudes is formed on a side surface 721 that defines the space S inside the main body housing 71 of the complex particle measurement apparatus 200. The fixation member 722 is formed with a through-hole-like threadable portion 723. A screw through the threadable portion 723 is threadedly engaged with the threaded hole 911 on the top surface of the casing 91 of the image-based particle measurement mechanism 9 to thereby secure the image-based particle measurement mechanism 9.

The communication pipe 35 of the second storage cell 8 is connected to the communication pipe 35 attached to the first storage cell 32 that is secured to the changer unit 3. When the changer unit 3 is loaded into the space S, the second storage cell 8 is housed in the image-based particle measurement mechanism 9. The recovery pipe 36 of the second storage cell 8 is connected to a recovery pipe 36 extending from the complex particle measurement apparatus 200. The supply pipe 34 attached to the first storage cell 32 is connected to a supply pipe 34 extending from the complex particle measurement apparatus 200.

In the present embodiment, the first storage cell 32 is supported by the apparatus body base 711 via the changer unit 3. The second storage cell 8 is supported by the apparatus body base 711 via the image-based particle measurement mechanism 9 and the side surface 721. In the present embodiment, the supporter supporting the first storage cell 32 and the second storage cell 8 corresponds to the apparatus body base 711.

The technical features (constituent features) in the embodiments can be combined with each other, and the combination can form a new technical feature. It is to be understood that the embodiments disclosed here is illustrative in all respects and not restrictive. The scope of the present invention is defined by the appended claims, and all changes that fall within the meanings and the bounds of the claims, or equivalence of such meanings and bounds are intended to be embraced by the claims.

### [Description of Reference Codes]

- 200: complex particle measurement apparatus
- 1: image-based particle measurement mechanism
- 12: second light irradiation unit
- 121: light source control unit
- 122: second light source
- 13: imaging unit
- 15: housing unit
- 129: reflecting mirror
- 131: camera
- 132: lens
- 153: first waterproof unit
- 154: second waterproof unit
- 2: scattering-based particle measurement mechanism
- 21: first light irradiation unit
- 211: first light source
- 22: photodetector
- 221: light receiving element
- 3: changer unit
- 4: circulation mechanism
- 41: dispersion bath
- 42: pump
- 43: drain valve
- 5: arithmetic device
- 6: information control mechanism
- 32: first storage cell
- 321: reception port
- 322: delivery port
- 33: second storage cell
- 331: reception port
- 332: delivery port
- 35: communication pipe
- 8: second storage cell
- 80: main body
- 81: first cylinder
- 814: thick plate part
- 82: second cylinder
- 824: reduced diameter part
- 825: O-ring
- 9: image-based particle measurement mechanism
- 91: housing
- 92: camera
- 93: lens
- 94: light source unit
- 95: window frame
- 96: window frame
- 97: output cable
- 98: power cable

## Claims

1. A complex particle measurement apparatus comprising:
a first light source that irradiates with light a particle group in a first storage cell storing a sample solution containing the particle group dispersed in a dispersion medium;
a photodetector that detects intensity of diffracted or scattered light generated by irradiation of the light irradiated;
a light intensity signal output unit that outputs a light intensity signal to an arithmetic device for calculating particle size distribution of the particle group based on the intensity of the light output from the photodetector;
a second light source that irradiates with light the particle group in a second storage cell storing the sample solution;
an imaging unit that images the particle group irradiated with light from the second light source;
an image data output unit that outputs image data to the arithmetic device for calculating a physical property of particles of the particle group based on the image data imaged by the imaging unit;
a supporter that supports the first storage cell and the second storage cell; and
a communication pipe that connects the first storage cell and the second storage cell to pass the sample solution,
wherein the first storage cell and the second storage cell have bottom surfaces located at positions different from each other, and
the communication pipe is laid such that a channel from the first storage cell to the second storage cell has an incline of not less than 0 or not more than 0.

2. The complex particle measurement apparatus according to claim 1, further comprising a circulation mechanism that circulates the sample solution through the first storage cell and the second storage cell, wherein
the first storage cell is provided with a first reception port that receives the sample solution from the circulation mechanism and a first delivery port that feeds out the sample solution, and
the second storage cell is provided with a second reception port that receives the sample solution fed out from the first storage cell and a second delivery port that feeds out the sample solution to the circulation mechanism, wherein
a position in height is increased in order from the first reception port, the first delivery port, the second reception port and the second delivery port.

3. The complex particle measurement apparatus according to claim 1 or 2, further comprising:
a first mirror that changes a light path of light emitted from the second light source to irradiate the second storage cell with the light; and
a second mirror that changes an optical axis direction of imaging by the imaging unit and causes the imaging unit to image the particle group irradiated with the light emitted from the second light source.

4. The complex particle measurement apparatus according to claim 3, wherein
the second light source, the first mirror, the second mirror and the imaging unit are arranged such that a light path of the light from the second light source to the imaging unit draws a U shape.

5. The complex particle measurement apparatus according to claim 4, wherein the second light source, the first mirror, the second mirror and the imaging unit are arranged such that the light path draws a U shape on a plane parallel to a ground plane on which the complex particle measurement apparatus is installed.

6. The complex particle measurement apparatus according to any one of claims 1 to 5, wherein a light path length of the light from an incident point to an exit point is uneven if light from the second light source is incident to, passes through and exits from an inside of the second storage cell.

7. The complex particle measurement apparatus according to claim 6, wherein the second storage cell is configured such that an irradiation surface of light from the second light source is not in parallel with an opposing surface to the irradiation surface.

8. The complex particle measurement apparatus according to claim 6, wherein the second storage cell is configured such that a shape of an irradiation surface of light from the second light source is stepwise in cross section in a direction intersecting with a flowing direction of the sample solution.

9. The complex particle measurement apparatus according to claim 6, wherein the second storage cell is configured such that a distance between a first inner surface irradiated with light from the second light source and a second inner surface parallel to the first inner surface is narrower at a middle portion and wider at both end portions in a direction intersecting with a flowing direction of the sample solution.

10. The complex particle measurement apparatus according to any one of claims 1 to 9, wherein the second light source and the imaging unit are housed in a waterproof casing.

11. The complex particle measurement apparatus according to claim 1 or 2, wherein
the second storage cell includes
a first cylinder that has a bottomed cylindrical shape and a bottom portion provided with a light transmittable material and is formed with an internal thread portion on an internal circumference at an open end; and
a second cylinder that has a bottomed cylindrical shape and a bottom portion provided with a light transmittable material and is formed with an external thread portion on an external circumference near the bottom portion, the second cylinder being threadedly engaged with the first cylinder that fits onto the second cylinder, wherein
the second cylinder reduces its diameter toward the bottom portion from the external thread portion in a tapered manner.
